# EUROPÄISCHE PATENTSCHRIFT

(11) **EP 0 678 583 B1**
(45) Veröffentlichungstag und Bekanntmachung des Hinweises auf die Patenterteilung: **27.12.1996**
(21) Anmeldenummer: 94105491.8
(22) Anmeldetag: 08.04.1994
(51) Int. Cl.: C13D 1/08, C13D 1/12, B01D 11/02

(54) **Verfahren zur Fest-Flüssig-Extrahierung und Extraktionsturm zur Durchführung des Verfahrens**
Process for solid-liquid extraction and extraction tower for carrying out this process
Procédé d'extraction solide-liquide et tour d'extraction pour la mise en oeuvre du procédé

(43) Veröffentlichungstag der Anmeldung: 25.10.1995
(73) Patentinhaber: Braunschweigische Maschinenbauanstalt AG, D-38122 Braunschweig (DE)
(72) Erfinder: Hartmann, Heinrich, Dipl.-Ing., 38104 Braunschweig (DE); Hellmig, Dieter, 38112 Braunschweig (DE); Matusch, Siegfried, Dipl.-Ing., D-38100 Braunschweig (DE); Pohner, Günter, D-38159 Vechelde (DE); Ross, Günther, D-38321 Klein-Denkte (DE); Sosnitza, Florian, D-38108 Braunschweig (DE)
(74) Vertreter: Einsel, Martin, Dipl.-Phys.

(56) Entgegenhaltungen:
- DE-B- 1 124 922
- FR-A- 1 210 682
- FR-A- 2 197 631
- US-A- 4 115 145

## Beschreibung

Die Erfindung betrifft ein Verfahren zur Fest-Flüssig-Extrahierung, insbesondere der Saccharose aus Rübenschnitzeln, mit Gegenstromextraktion in einem Extraktionsturm, aus dem Turmsaft über Siebe abgezogen wird, und einen Extraktionsturm zur Durchführung des Verfahrens.

Verfahren zur Fest-Flüssig-Extrahierung sind beispielsweise bei der Gegenstromextraktion von Saccharose aus Rübenschnitzeln unter Verwendung eines Extraktionsturms bekannt (DE 42 33 680 C1, GM 76 07 097, GM 74 39 969). Bei einem solchen bekannten Verfahren werden die frischen Rübenschnitzel zunächst zur Anwärmung und Denaturierung einer sogenannten Gegenstrom-Schnitzelmaische zugeführt. Das ist eine Kombination einer Apparatur zum Erhitzen und Rühren von Rübenschnitzeln. Sie ermöglicht die Gewinnung von Rohsaft mit einer mikrobiologisch sehr günstigen Temperatur. Der Rohsaft entsteht bei der Erwärmung und Denaturierung der Rübenschnitzel. Dadurch wird das Zellplasma teilweise zerstört und der Austritt des Rohsaftes ermöglicht. Nach Abschluß dieses Danaturierungsvorganges werden die Saccharose mittels Schnitzelpumpen einem Extraktionsturm zugeführt. Der Extraktionsturm beinhaltet eine zentrale, mit Transportflügeln zum Transport der Rübenschnitzel innerhalb des Turms versehene Welle und verschiedene Stutzen zum Zu- und Ableiten von Flüssigkeiten und Festbestandteilen, wie beispielsweise von Rübenschnitzeln. Die Extraktion des Zuckers aus den Rübenschnitzeln erfolgt unter Luftabschluß im Gegenstromverfahren. Dabei werden die Rübenschnitzel im Gegenstrom zu eingeführtem Preß- und Frischwasser geführt. Durch das Preß- und Frischwasser werden den Rübenschnitzeln die Saccharose und andere lösliche Substanzen entzogen. Das Preßwasser entsteht durch Auspressen von Rübenschnitzeln. Das Frischwasser ist eine Mischung aus heißem und kalten Wasser. Bei bekannten Extraktionstürmen werden der Extraktionsturm und eine Gegenstrom-Schnitzelmaische kombiniert verwendet.

Durch das Führen von Rübenschnitzeln und Preß- und Frischwasser im Gegenstrom, also dem Transport der Rübenschnitzel von unten nach oben und dem Transport der Wasser von oben nach unten wird die Saccharose aus den Rübenschnitzeln gelöst. Es entsteht einerseits eine wasserähnliche, mit der Saccharose angereichete Flüssigkeit, der sogenannte Turmsaft. Andererseits entsteht als Extraktionsrückstand aus den Rübenschnitzeln die sog. Pülpe. Sie ist das Mark der Rüben und ist durch einem oben an dem Extraktionsturm angeordneten Stutzen entnehmbar. Der Abzug des Turmsaftes vom Extraktionsturm erfolgt hauptsächlich über ein Bodensieb und teilweise zusätzlich durch Seitensiebe. Der abgezogene Turmsaft wird über Sandabscheider geführt, die den Saft von eventuell noch im Turmsaft enthaltenen Festbestandteilen, wie Sand und Erde der rohen Rüben, befreien. Diese Festbestandteile werden nicht bereits bei der Saccharosegewinnung in dem Extraktionsturm entfernt, sondern mit dem Turmsaft zusammen abgezogen. Anschließend wird der Turmsaft meist einer Gegenstrom-Schnitzelmaische zugeführt.

Das verwendete Bodensieb der bekannten Extraktionstürme wird zentrisch abgestützt, wobei durch eine seitliche Öffnung der zentrischen Abstützung zugleich ein Gemisch aus Rübenschnitzeln und Rohsaft in den Extraktionsturm eingepumpt werden kann. Das Bodensieb erstreckt sich dabei über den größten Teil des Turmmanteldurchmessers und ist meist aus Teilsieben zusammengesetzt.

Wegen der sich auf dem Bodensieb infolge der Strömungsrichtung absetzenden und die Siebe verstopfenden Feststoffe sind mit der rotierenden Welle Abstreifer verbunden, die ständig über das Bodensieb gleiten und die Feststoffe vom Sieb lösen und wieder dem Transportweg zuführen.

Der Erfindung liegt die Aufgabe zugrunde, ein verbessertes Verfahren und einen verbesserten Extraktionsturm zur Fest-Flüssig-Extrahierung, insbesondere der Saccharose aus Rübenschnitzeln, mit Gegenstromextraktion in einem Extraktionsturm, aus dem Turmsaft über Siebe abgezogen wird, zu schaffen.

Diese Aufgabe wird durch die im Anspruch 1 definierte Erfindung gelöst. Weiterbildungen der Erfindung sind in den Unteransprüchen definiert. Dadurch wird ein Extraktionsturm erzielt, bei dem das bisher notwendige Bodensieb, das wegen der wechselnden Gewichtsbelastungen und der bisher notwendigen Vermeidung von Siebverstopfungen aufwendige Konstruktionen erforderte, im wesentlichen entfallen kann. Weiterhin kann ein solcher Turm bei den immer größeren Baueinheiten noch kostengünstiger produziert werden.

Das bisher verwendete Bodensieb wird nämlich bei der Erfindung durch ein im wesentlichen geschlossenes, tragfähiges und steifes Bodenteil ersetzt, das wiederum die Verwendung einer optimalen Standzarge ermöglicht. Auch die Gefahr von Infektionsnischen, in denen sich Turmsaft oder Festbestandteile im Turmsaft sammeln und den neu entstehenden Turmsaft infizieren kann oder können, wird vermindert.

Im Prinzip wird ein Verfahren angegeben und ein Extraktionsturm zur Fest-Flüssig-Extraktion geschaffen, bei dem der Turmsaft und die darin enthaltenen kleinformatigen Festbestandteile, im folgenden Feststoffe genannt, im wesentlichen über Seitensiebe abgezogen werden. Mit den kleinformatigen Feststoffen ist bei der Extraktion von Zuckerrüben beispielsweise Sand gemeint. Der Abzug des Turmsaftes im wesentlichen nur über die Seitensiebe steht in völligem Gegensatz zu bekannten Verfahren, bei denen Seitensiebelemente im wesentlichen Hilfsfunktionen ausüben. Der Turmsaft wird mit vorbestimmter Geschwindigkeit aus dem Extraktionsturm abgezogen. Dies bedeutet, daß die Abzugsgeschwindigkeit manuell voreinstellbar ist oder entsprechend dem Extraktionsprozeß nachstellbar ist. Die Abzugsgeschwindigkeit kann bei der Regelung des Extraktionsprozesses beispielsweise über Ventile oder Schieberelemente eingestellt werden. Auch eine automatische, z.B. elektrische, hydraulische etc., Nachsteuerung kann eingesetzt werden.

Bei der Fest-Flüssig-Extrahierung anfallende Feststoffe werden, soweit sie klein genug sind, mit dem Turmsaft über die Seitensiebe abgezogen. Größere Bestandteile und vom Turmsaft nicht mitgenommene kleinere Bestandteile sinken auf den Boden ab. Durch im Extraktionsturm auch im Bodenbereich und im Bereich der Seitensiebe auftretende oder bewirkte Maßnahmen, wie Verwirbelungen werden die Festbestandteile ständig in dem Turmsaft aufgewirbelt. Dadurch können auch die sich schon absetzenden kleineren Bestandteile erneut mit dem abzuziehenden Turmsaft mitgenommen werden. Die Verwirbelungen im Bodenbereich entstehen einerseits durch an einer zentralen Welle angeordnete Transportflügel zum Transport beispielsweise der Rübenschnitzel im Gegenstrom zu weiter oben an dem Extraktionsturm eingebrachten Preß- und Frischwasser. Andererseits werden sie durch Abstreifer erregt. Diese streifen beispielsweise als schaufelartige, schräg angestellte Teile, z.B. aus Metall, aber auch aus hochfestem Kunststoff oder dergleichen, über den Boden des Extraktionsturms und wirbeln so die Feststoffe auf. Die Verwirbelungen im Bereich hinter den Seitensieben werden beispielsweise durch ständig wechselnde Strömungsrichtungen infolge wechselnder Öffnung unterschiedlicher Abzugswege bewirkt.

Im Bedarfsfall kann, beispielsweise bei besonders großen Mengen von sich auf dem Bodenteil absetzenden Feststoffen und/oder bei geringeren Verwirbelungen diese Restmenge der Feststoffe, die an den Seitensieben vorbeigeströmt ist, im tragfähigen Boden beispielsweise in gesondert dafür vorgesehenen Taschen gesammelt werden. Aus diesen Taschen oder aus diesem Bodenteil können die Feststoffe entnommen werden. Die Feststoffe, die über die Seitensiebe abgezogen werden, sind emulsionsartig mit dem Turmsaft verbunden. Die Entnahme der Restmenge der Feststoffe aus dem Bodenteil kann manuell oder automatisch über Bodenöffnungen erfolgen.

Die Erfindung ist nicht nur bei der Verwertung von Zuckerrüben oder Zuckerrohr anwendbar, sondern such bei anderen Produkten, wie beispielsweise ölhaltigen Produkten, Zellstoffen, Papier oder dergleichen.

Zur näheren Erläuterung der Erfindung werden im folgenden mehrere Ausführungsbeispiele von Extraktionstürmen zur Durchführung des Verfahrens anhand der Zeichnungen beschrieben. Diese zeigen in:
- Fig.1:: eine schematische Schnittansicht einer ersten Ausführungsform eines Extraktionsturmes zur Fest-Flüssig-Extraktion,
- Fig.2:: eine Detailansicht eines Extraktionsturmes gemäß Fig.1,
- Fig.3:: eine weitere Detailansicht einer zweiten Ausführungsform eines Extraktionsturmes zur Fest-Flüssig-Extraktion,
- Fig.4:: eine schematische Querschnittansicht durch einen Saftringkanal gemäß Fig.2,
- Fig.5:: eine perspektivische Ansicht einer Baueinheit aus Seitensieb und Rahmen und
- Fig.6:: eine perspektivische Detailansicht eines Seitensiebes in der Ausführung als Spaltsieb.

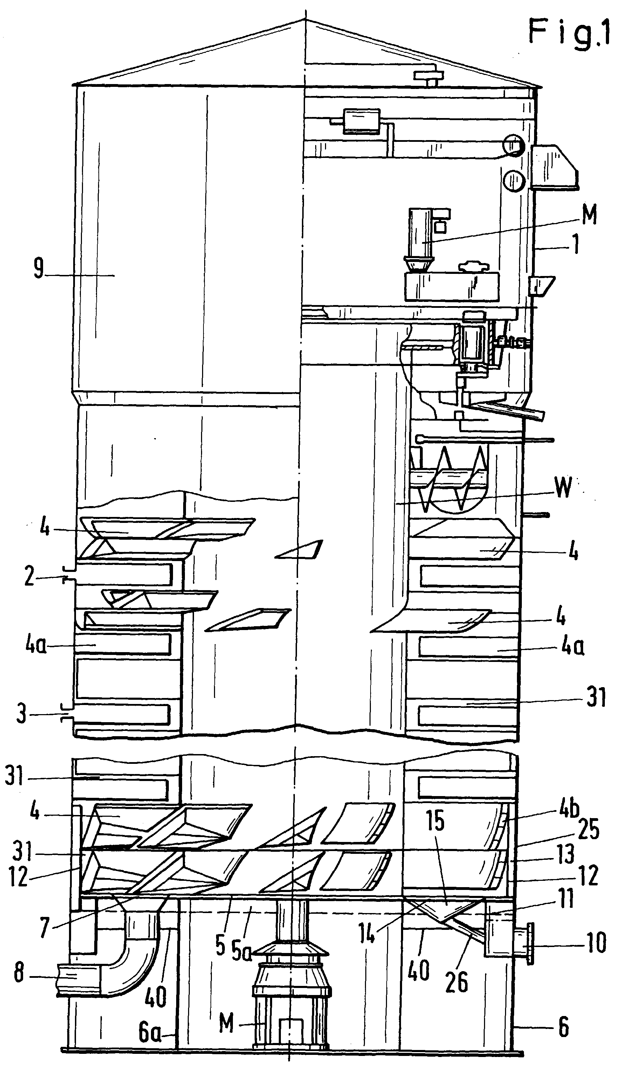

In **Fig.1** ist ein Ausführungsbeispiel eines Extraktionsturmes zur Fest-Flüssig-Extraktion dargestellt. Der Extraktionsturm weist eine zylindrische Außenzarge 1 auf. An dieser Außenzarge 1 sind zwei übereinander angeordnete Einfüllstutzenebenen 2,3 zur Einführung von Preß- und Frischwasser angeflanscht. Jede Ebene weist mehrere Stutzen auf. Im Inneren der Außenzarge 1 des Extraktionsturmes sind auf einer Welle W Transportflügel 4 angeordnet, die mit Aufhaltern 4a zur Erzielung einer Axialtransportbewegung der Schnitzel zusammenwirken. Die Transportflügel 4 und Aufhalter 4a sind nur angedeutet. Die Aufhalter 4a sind an einer Außenwandung 25 der Außanzarge 1 angeordnet, die Transportflügel an der zentralen Welle W des Extraktionsturms. Üblicherweise werden mehrere Ebenen solcher Transportflügel 4 und Aufhalter 4a eingesetzt. Die Transportflügel 4 und Aufhalter 4a dienen beispielsweise dem Transport von Rübenschnitzeln im Gegenstrom zu Preß- und/oder Frischwasser. Die Welle W wird durch ein oder mehrere, elektrisch oder hydraulisch betriebene Motoren M angetrieben. Diese können zentral oder verteilt angeordnet und mit der Welle W beispielsweise über ein Getriebe, einen Zahnkranz oder dergleichen verbunden sein oder werden.

Die Außenzarge 1 ist auf ihrer Unterseite mit einem Bodenteil 5 verbunden. Es ist beispielsweise eingesetzt oder wird von der Außenzarge 1 umhüllt und gegebenenfalls von Trägern 5a unterstützt, die mit der Außenzarge 1 beispielsweise verschweißt sind. Die Außenzarge 1 des Extraktionsturmes ruht auf einer oder mehreren Standzargen 6,6a oder dergleichen. Die innere Standzarge 6a unterstützt das Bodenteil 5, damit dieses bei großen Turmdurchmessern sich nicht durchbiegt. Die Wandungen der beiden Zargen 1 und 6 liegen aufeinander auf, wobei das Bodenteil 5 und die höheren äußeren Zargenteile nacheinander auf der oder den vorbereiteten Standzargen 6,6a aufgebaut werden. Die Verbindungsstelle der beiden Zargen 1,6 ist mittels Wandungen 40 geschaffen, die beispielsweise Flansche sein können. Dadurch sind die beiden Zargen 1,6 miteinander mittels Schrauben oder auch durch Verschweißen verbindbar.

In einer Öffnung 7 in dem Bodenteil 5 ist ein Einfüllstutzen 8 für das Gemisch aus beispielsweise Rübenschnitzeln und Turmsaft angeordnet. Die Einspeisung des Gemisches aus Rübenschnitzeln und Saft erfolgt entgegen der Drehrichtung der Transportflügel 4 auf der Welle W. Zu diesem Zweck ist der Einfüllstutzen 8 vorzugsweise schräg in dem Bodenteil 5 zwischen der Welle W mit den Transportflügeln 4 und der Außenwandung 25 der Außenzarge 1 des Extraktionsturmes mit den dort angeordneten Aufhaltern 4a vorgesehen. Der Einfüllstutzen 8 ist so angeordnet, daß das Bodenteil 5 nicht geschwächt wird. Dies wird beispielsweise durch entsprechende apparatetechnische Auslegung der Wandstärken bewirkt.

Auf der rechten Seite des in Fig.1 dargestellten Turmes, der dem Einfüllstutzen 8 für das Gemisch aus Rübenschnitzeln und Turmsaft gegenüberliegenden Seite sind ein oder mehrere Auslaßstutzen 10 für den Turmsaft angeordnet. Er wird aus der Standzarge 6 herausgeführt. Der Turmsaft strömt aus dem Extraktionsturm über an seinem unteren Bereich angeordnete Seitensiebe 12 und ein oder mehrere ringförmige Safträume 13 in einen Saftringkanal 11. Dieser Saftringkanal 11 ist mit einem oder mehreren Auslaßstutzen 10 verbunden. Die Seitensiebe 12 sind entlang der Außenwandung 25 des Turms in vorbestimmten Abständen von dieser angeordnet. Diese Außenwandung 25 ist Teil der Außenzarge 1. Die Transportflügel 4 reichen bis fast an die Siebe 12 und oberhalb der Siebe 12 bis an diese Wandung 25 heran. Die Transportflügel 4 haben im Bereich der Siebe 12 bewegliche Abstreifer 4b, die die Siebe 12 ständig reinigen. Solche Abstreifer 4b sind ebenfalls auf dem Bodenteil 5 vorgesehen. Dort verhindern sie ein Absetzen von Feststoffen, indem sie diese ständig aufwirbeln.

Der hinter dieser Außenwandung 25 angeordnete, mit dem Innenraum 31 des Extraktionsturmes über die Seitensiebe 12 verbundene Saftraum 13 kann als ein an der Innenseite der Außenwandung 25 umlaufender Ringraum oder in Form getrennter Safträume ausgeformt sein. Im allgemeinen ist hinter jedem Sieb 12 ein getrennter Saftraum 13 angeordnet.

Um hohe Strömungsgeschwindigkeiten zu erreichen, sind der Saftraum oder die Safträume 13 relativ klein bemessen. Der Saftringkanal 11 ist vergleichsweise größer bemessen und so ausgelegt, daß er durch Strömung des Saftes Ablagerungen vermeidet. Die Geschwindigkeit, mit der der Turmsaft aus dem Extraktionsturm abgezogen wird, ist vorbestimmbar. Sie läßt sich manuell oder automatisch mittels Schiebern, Klappen oder dergleichen einstellen. Die Steuerung der Schieber erfolgt nach Erfahrungswerten. Eine willkürliche Änderung der abzuziehenden Turmsaftmenge ist jederzeit möglich, z.B. bei Störungen. Die Schieber können gesteuert, aber auch geregelt werden. Dabei kann die Steuerung oder Regelung in Abhängigkeit von dem Prozeß der Fest-Flüssig-Extrahierung und dessen Parametern erfolgen.

Meist ist die Wirkung der Seitensiebe und der Verwirbelungsmaßnahmen ausreichend, das Absetzen der Feststoffe auf dem Bodenteil 5 zu verhindern oder gering zu halten. Die geringen Mengen können von Zeit zu Zeit im Bedarfsfalle durch Bodenöffnungen 14 entfernt werden. In Fig.1 ist unterhalb der unteren Ebene der Außenzarge 1 des Extraktionsturmes ein Auffanggefäß 15 angeordnet, das vorzugsweise am Bodenteil 5 befestigt ist. Dieses Auffanggefäß 15 wird im wesentlichen nur dann vorgesehen, wenn größere Mengen an Feststoffen, wie Sand, zu erwarten sind. Das am Bodenteil 5 befestigte Auffanggefäß 15 ist durch eine meist segmentförmig ausgebildete Bodenöffnung 14 in dem Bodenteil 5 der Außenzarge 1 des Extraktionsturmes mit dem Innenraum 31 des Extraktionsturmes verbunden. Bei dem Prozeß der Fest-Flüssig-Extrahierung, beispielsweise von Rübenschnitzeln und Saft, fallen Feststoffe an. Diese können einerseits sehr kleine Rübenschnitzelteile, andererseits andere organische oder anorganische Bestandteile sein, die beim Einführen der Rübenschnitzel in den Extraktionsturm an diesen anhaften. Zu denken ist hier besonders an mit den Rüben vom Feld mitgebrachten Sand und Erde. Diese Feststoffe werden in der Regel mit dem Turmsaft zusammen über die Seitensiebe 12 abgezogen. Die verbleibende Menge von kleinformatigen Feststoffen, hier Restmenge der Feststoffe genannt, die an den Seitensieben 12 vorbeiströmt, lagert sich auf dem Bodenteil 5 der Außenzarge 1 des Extraktionsturmes ab. Diese gesammelten Feststoffe werden im Betrieb ständig durch die Abstreifer 4b aufgewirbelt und den Seitensieben erneut zugeführt. Dann eventuell noch, beispielsweise bei zu großen Mengen an anfallenden Feststoffen oder nicht ausreichenden Verwirbelungen durch die Transportflügel und Abstreifer, verbleibende Feststoffe können durch die Bodenöffnung 14 oder Öffnungen in das Auffanggefäß 15 einströmen. Mittels der Transportflügel 4 und der schräg angestellten, schaufelartigen, beweglichen, an den Seitensieben 12 und auf dem Bodenteil 5 angeordneten Abstreifer 4b beispielsweise aus Kunststoff werden die Feststoffe in dem Turmsaft verwirbelt, so daß ein emulsionsartiges Gemisch entsteht. Die Abstreifer 4b streifen über den glatten Boden des Bodenteils 5, ohne, wie bei den bekannten Extraktionstürmen mit Bodensieben, die Gefahr des Einklinkens und Herausreißens des gesamten Bodensiebes.

Aus dem oder den Auffanggefäßen 15 kann der Feststoff anschließend entnommen werden. Diese Entnahme des Feststoffes geschieht in Fig.1 über den oder die Auslaßstutzen 10 für den Turmsaft. Das Auffanggefäß 15 ist hier über eine Rohrleitung 26 mit dem Auslaßstutzen 10 verbunden. Das Auffanggefäß 15 ist napf förmig spitz, wobei die Rohrleitung 26 an einer tiefsten Stelle des Auffanggefäßes 15 angegliedert ist. Die Rohrleitung 26 verläuft zur besseren Weiterleitung der Feststoffe schräg nach unten in den Auslaßstutzen 10 ein.

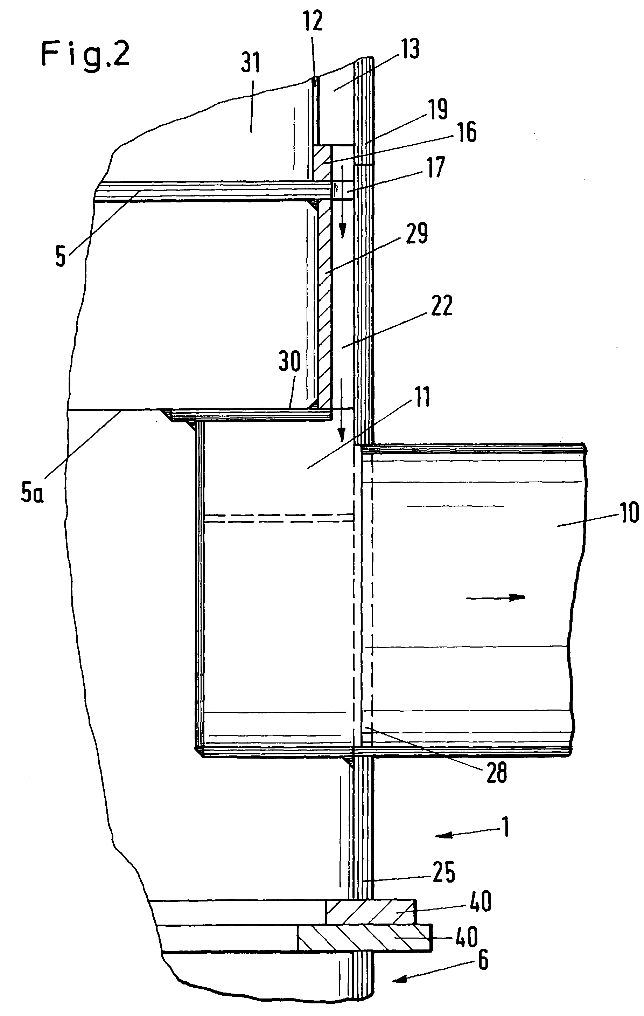

**Fig.2** zeigt eine Detailansicht eines Auslaßstutzens 10 und der darüber angeordneten Seitensiebe 12, des Saftraumes 13 und des Saftringkanals 11. Der schwarze Pfeil innerhalb des Auslaßstutzens 10 weist die Auslaßrichtung. In einen Ausschnitt 28 der Wandung 25 ist je ein Auslaßstutzen 10 eingefügt. Die Auslaßstutzen 10 sind in den Saftringkanal 11 hineingeführt. Der Strömungsquerschnitt des Saftringkanals 11 bestimmt die Geschwindigkeit, mit der der Turmsaft aus dem Auslaßstutzen 10 ausströmt.

Zwischen dem Bodenteil 5 und einer zu dem darunter angeordneten Auslaßstutzen gehörigen Wandung 30, die etwa parallel zu dem Bodenteil 5 verläuft, ist ein Wandungsteil 29 parallel zu der Außenwandung 25 der Außenzarge 1 angeordnet. Dieses Wandungsteil 29 bildet mit der Außenwandung 25 der Außenzarge 1 Saftverbindungswege 22. In dem darüber angeordneten Teil der Außenwandung 25 sind die Seitensiebe 12 angeordnet. Das Wandungsteil 29 begrenzt nach innen die Saftverbindungswege 22. Diese verlaufen als gegebenenfalls durch die Träger 5a unterbrochene Ringräume zwischen der Wandung 25 der Außenzarge 1 und diesem Wandungsteil 29 und zwischen dem Bodenteil 5 und der dazu parallelen Wandung 30. Die obere Begrenzung der Saftverbindungswege 22 bilden Auslaßöffnungen 17 der Safträume 13. Diese Auslaßöffnungen 17 sind vorzugsweise in dem Bodenteil 5 angeordnet. Dies bedeutet, daß der äußere Rand des meist in der Außenzarge 1 befindlichen Bodenteils 5 mit Löchern, Spalten oder Schlitzen versehen wird. Der in den Saftraum einströmende Turmsaft kann über diese Auslaßöffnungen 17 in die Saftverbindungswege 22 gelangen. Von dort strömt er direkt in den Saftringkanal 11 und von dort zu dem oder den Auslaßstutzen 10 für den Turmsaft. Die Strömungsrichtung ist durch einen schwarzen Pfeil markiert.

Der oberhalb der ringförmig angeordneten Auslaßöffnungen 17 angeordnete Saftraum 13 wird zu seiner einen Seite durch die Wandung 25 der Außenzarge 1 begrenzt, zu seiner anderen Seite durch die Seitensiebe 12. In Fig.2 weist dieser Saftraum 13 eine größere waagerechte Erstreckung auf als die Saftverbindungswege 22, so daß eine Erhöhung der Strömungsgeschwindigkeit erzielt wird. Wie bereits erwähnt, besteht der Saftraum 13 zumeist aus mehreren Safträumen 13. Diese Safträume 13 entstehen durch die Ausführung der Seitensiebe 12 in Rahmenkonstruktion. Die Rahmen 16 dieser Rahmenkonstruktion liegen mit ihren beiden senkrechten Seiten an der Außenwandung 25 der Außenzarge 1 an. Die Seitensiebe 12 bilden mit den Rahmen 16 zusammen segmentartige Baueinheiten. Die Segmente sind als Kreissegmente auf den Umfang der Außenzarge 1 verteilt angeordnet. Ein Rahmen 16 trägt und begrenzt jeweils ein Seitensieb 12.

Der durch die Extrahierung entstehende Turmsaft strömt aus dem Innenraum 31 des Extraktionsturms durch die Seitensiebe 12 in jeweils einen Saftraum 13 und von dort durch die ringförmig angeordneten Auslaßöffnungen 17 und die Saftverbindungswege 22 in den Saftringkanal 11. Der Turmsaft kann letztlich dem oder den Auslaßstutzen 10 entnommen werden. Eine derartige Führung des Turmsaftes gewährleistet einen guten Saftabzug ohne die Gefahr von Infektionsnischen. Der Turmsaft kann sich also nicht in Nischen des Extraktionsturms ansammeln.

Die Rahmen 16 der Seitensiebe 12 können durch Öffnungen 19 in der Wandung 25 der Außenzarge 1 entnommen werden. Vorzugsweise kann bei durch die Öffnung 19 herausgenommene Rahmen 16 und damit Seitensiebe 12 eine Spülung oder Reinigung des Innenraumes des Extraktionsturms vorgenommen werden. Die Anordnung ist zumeist so getroffen, daß die einzelnen Safträume 13 abschnittsweise gereinigt werden können.

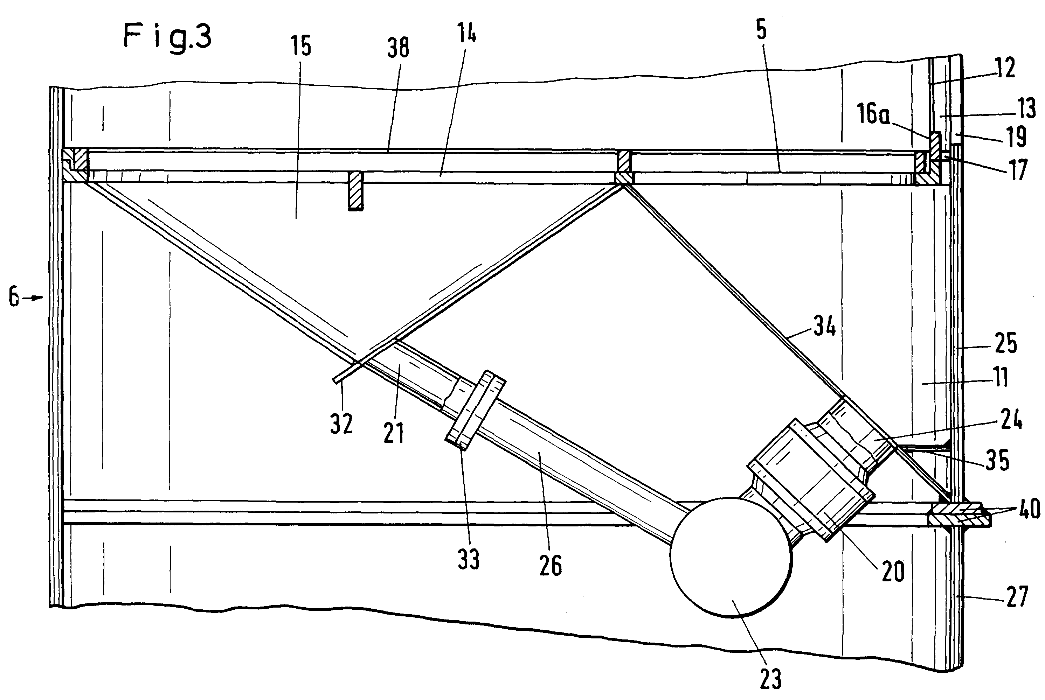

In **Fig.3** ist ein Detailausschnitt einer Schnittansicht einer zweiten Ausführungsform des unteren Bereichs der Außenwandung 25 eines Extraktionsturmes dargestellt. Das Bodenteil 5 kann, wie in Fig.1, mit Bodenöffnungen 14 versehen sein. Durch diese Bodenöffnungen 14 können im Bedarfsfall Restmengen der Feststoffe, die bei der Fest-Flüssig-Extrahierung, beispielsweise bei der Gegenstromextraktion von Rübenschnitzeln, anfallen, in ein darunter angeordnetes Auffanggefäß 15 absinkenen. Das Auffanggefäß 15 läuft nach unten napf förmig spitz zu. Es weist an seiner einen Wandung 32 eine Öffnung 21 auf. In diese Öffnung 21 ist eine Rohrleitung 26 eingefügt. Sie führt zu einer weiter unten gelegenen Ringleitung 23. Über ein Verriegelungselement 33 in der Rohrleitung 26 kann die Entnahme des Feststoffes aus dem Auffanggefäß 15 über die Rohrleitung 26 und die Ringleitung 23 bewirkt oder gesteuert werden. Die Menge der über die Öffnung 21 in die Ringleitung 23 strömenden Feststoffe ist wesentlich kleiner als die Strömung durch die Seitensiebe 12.

Die Ringleitung 23 führt zu einem oder mehreren nicht dargestellten Auslaßstutzen 10. Aus diesem oder diesen Auslaßstutzen 10 kann das Gemisch aus Feststoffen und Turmsaft aus der Rohrleitung 26 oder aus dem Saftringkanal 11 entnommen werden. Als Verbindung zu dem Saftringkanal 11 ist zwischen einer Abflußöffnung 24 des Saftringkanals 11 und der Ringleitung 23 ein Mittel 20 zum Blockieren, hier ein Schieber, angeordnet.

Machbar sind ebenso eine Klappe, ein Ventil oder dergleichen. Mittels des Schiebers 20 kann die Abflußöffnung 24 in dem Saftringkanal 11 verriegelt oder zumindest teilweise verriegelt werden.

Der Saftringkanal 11 weist in Fig.3 eine andere Form auf als in Fig.2. Er erstreckt sich über den gesamten Umfang des Extraktionsturms. In Fig.2 hingegen ist er aus zwei Hälften aufgebaut. Im Profil erscheint er dreieckig mit einer nach unten weisenden Spitze. Zu seiner einen Seite ist er durch die Wandung 25 der Außenzarge 1 begrenzt. Eine schräg zu dieser Wandung 25 verlaufende Wandung 34 begrenzt den Saftringkanal 11 zu seiner anderen Seite. In Höhe der Abflußöffnung 24 ist waagerecht eine Stützwand 35 angeordnet, die parallel zu dem Bodenteil 5 verläuft. Die Gefahr einer Infektionsnische in der Spitze des Dreieckprofils des Saftringkanals 11 besteht dadurch nicht mehr. Durch den im wesentlichen glatten Abschluß der Stützwand 35 mit der Abflußöffnung 24 des Saftringkanals 11 strömt der Turmsaft direkt durch die Abflußöffnung 24 und den Schieber 20 in die Ringleitung 23 und von dort in den oder die nicht dargestellten Auslaßstutzen 10.

Anstelle nur eines Schiebers 20 oder einer Klappe sind im allgemeinen mehrere Schieber oder Klappen über den Umfang des Saftringkanals 11 verteilt angeordnet. Die Schieber 20 oder Klappen sind wahlweise so steuerbar oder regelbar, daß ein oder mehrere Schieber geöffnet und andere geschlossen sind. Daraus folgt ein in seiner Richtung steuerbarer Abzug von Feststoffen und von Turmsaft und damit eine zusätzliche Vermeidung von Ablagerungen im Saftringkanal 11. Eventuell im Prozeß der Extrahierung auftretende Störungen können ausgeglichen werden. Ein abschnittsweises Spülen des Saft- oder Ringraumes 13 oder der Safträume wird ermöglicht, indem Turmsaft über nicht dargestellte Leitungen von oben in die Safträume 13 gepumpt wird. Durch den bündig mit der Außenwandung 25 abschließenden, die Öffnung 19 abdeckenden Teil der Außenwandung 25 ist im Gegensatz zu den bekannten Extraktionstürmen mit von außen aufgesetzten und mittels Dichtungen abgedichteten, über den Umfang des Turms verteilten Öffnungsabdeckungen 19 kein kompliziertes Leitungssystem mehr erforderlich. Da keine Infektionsnischen oder andere Ablagerungsnischen mehr vorhanden sind, wird die Spülflüssigkeit lediglich durch entsprechende Stutzen in eine oberhalb der Safträume 13 gelegene Ebene eingebracht. Die Spülflüssigkeit gelangt wie der Turmsaft durch den oder die Auslaßstutzen 10 letztendlich wieder aus dem Turm heraus.

Das Bodenteil 5 ist entweder zur Gänze glatt ausgebildet oder mit beispielsweise segmentförmigen Sandabzugstaschen 15 ausgestattet und in diesem Bereich durch ein Bodensieb 38 abgedeckt. Das segmentförmige Bodensieb 38 ist so in das Bodenteil 5 eingelassen, daß ein darüber bewegter Abstreifer 4b nicht an einem Teilstück des Bodensiebes einklinken und dieses herausreißen kann. Das sonst glatte Bodenteil 5 bietet im Gegensatz zu den bekannten Konstruktionen mit Bodensieben zum Abzug des Turmsaftes keine Angriffsfläche für das Einklinken von Abstreifern 4b. Die Bodenöffnungen 14 unterhalb der Bodensiebe 38 oder anstelle der Bodensiebe 38 können schlitzförmig, lochförmig oder selbst siebförmig sein. Ihre Aufgabe ist es, die zu großen Feststoffe von der jeweiligen Auslaßöffnung 21 fernzuhalten, um deren Verstopfen bei der gelegentlichen Entleerung zu verhindern. Anstelle von Schlitzen und einem Siebelement 38 können auch mehrere kleine, in das Bodenteil 5 eingelassene Siebelemente 38 vorgesehen sein.

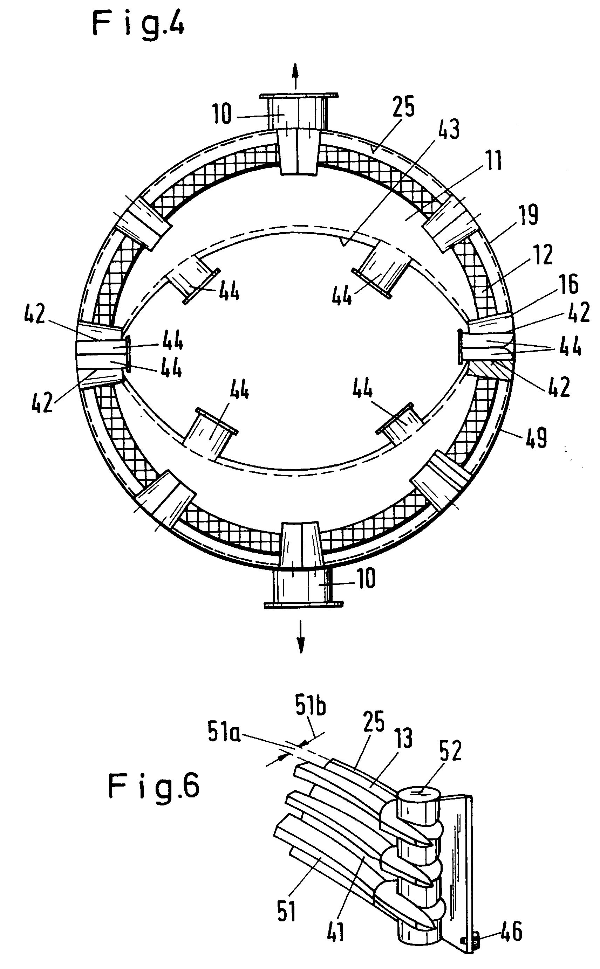

Die Seitensiebe 12 sind in Rahmen 16 eingefügt. Der jeweilige Rahmen 16 steht auf dem Bodenteil 5 auf. Ein unteres Teil 16a des Rahmens 16 liegt nicht an der Außenwandung 25 der Zarge 1 an. Durch den verbleibenden Schlitz tritt der abzuziehende Turmsaft in den darunter befindlichen Saftringkanal 11 ein. Wie besser aus Fig.4 ersichtlich, lagern sich die seitlichen, senkrecht verlaufenden Rahmenteile an der Außenwandung 25 der Außenzarge 1 an. Sie sind dort befestigt, beispielsweise verschraubt.

In der Außenwandung 25 der Außenzarge 1 ist im Bereich eines einzelnen Seitensiebes 12 eine Öffnung 19 zum Reinigen, Entnehmen und Auswechseln der Siebe 12 und Spülen des Saftraumes oder der Safträume 13 und des Saftringkanals 11 angeordnet. Die Öffnung 19 hat die Größe eines Mannloches und ist darüberhinaus so groß bemessen, daß die einzelnen Seitensiebe 12 nacheinander vor diese Öffnung 19 geschoben werden und durch diese Öffnung 19 entnehmbar sind. Sie können ebenfalls fest in dem Extraktionsturm montiert sein, wobei eine separate Spülvorrichtung das Reinigen ermöglicht. Der die Öffnung 19 verschließende Teil der Außenwandung 25 ist vorzugsweise mit einem Sieb 12 und einem Rahmen 16 eine Baueinheit, die von außen in die Außenzarge 1 eingesetzt und darin befestigt ist. Statt nur einer Öffnung 19 können auch zwei oder mehrere solcher Öffnungen 19 als begehbares Mannloch ausgebildet sein oder werden.

Anstelle der Auslaßstutzen 10 oder innerhalb dieser kann ein Entnahmeventil vorgesehen sein. Dieses ist, wie auch die zuvor genannten Schieber 20 oder Klappen manuell oder automatisch bedienbar, steuerbar oder regelbar. Die Ansteuerung kann mechanisch, elektrisch oder hydraulisch, beispielsweise mittels sogenannter Proportionalventile erfolgen, die elektronisch in Abhängigkeit von einem vorgegebenen Programm und/oder in Abhängigkeit von Meßwerten gesteuert oder geregelt werden. Der Turmsaft wird im allgemeinen ständig kontinuierlich entnommen. Eine Regelung der Entnahmemenge des Turmsaftes ist aber ebenso möglich.

Parallel zu dem Bodenteil 5 sind in Fig.3 zwei ringförmig an der Außenwandung 25 der Außenzarge 1 umlaufende Auflager- und Versteifungswandungen 40 oder Flansche in den Extraktionsturm eingefügt. Sie bilden die Grenze zwischen der oben angeordneten Außenzarge 1 und der darunter gelegenen Standzarge 6. Durch die Wandungen 40 wird eine größere Auflagefläche der Außenwandung 25 der Außenzarge 1 und einer Außenwandung 27 der Standzarge 6 bereitgestellt. Zudem versteifen sie den um den Extraktionsturm umlaufenden Stoßrand der beiden Außenwandungen 25,27 der Zargen 1,6. Die Wandungen 40 sind jeweils mit den Außenwandungen der Zargen durch Verschweißen und gegeneinander entweder ebenfalls durch Verschweißen oder Verschrauben verbunden.

Die schräg verlaufende Wandung 34 des Saftringkanals 11 stützt sich auf den Wandungen 40 ab. Aufwendige Bodensiebkonstruktionen mit filigranen Bodensieben, wie bei den bekannten Extraktionstürmen, entfallen bei den erfindungsgemäßen Türmen völlig. Dafür ist das Bodenteil 5 glatt und in sich steif, im wesentlichen geschlossen und tragfähig. Die Sicherheit beim Betrieb der auf dem Bodenteil 5 gleitenden, die sich dort anlagernden Feststoffe aufwirbelnden Abstreifer 4b wird dadurch immens verbessert. Einerseits kann das Bodenteil 5 dicker und kompakter hergestellt werden, andererseits bleiben die Abstreifer nicht mehr an eventuell aus dem Boden herausragenden Teilstücken der Bodensiebe hängen.

Auch die Außenzarge 1 ist dadurch einfacher und kostengünstiger zu konstruieren und zu produzieren, da nicht, wie bei den bekannten Türmen, komplizierte Befestigungsvorrichtungen für die Bodensiebe vorgesehen werden müssen. Das kompakte, glatte, steife und tragfähige Bodenteil 5 wird lediglich in die Außenzarge 1 eingefügt und mit dieser verbunden, beispielsweise verschweißt.

Der Siebverschleiß ist aufgrund der senkrechten Einbaulage der Seitensiebe 12 in Rahmen 16 und der daraus folgenden geringen mechanischen Belastung relativ gering. Große Feststoffe können die Siebe 12 im allgemeinen nicht beschädigen, da sie sich auf dem Bodenteil 5 anlagern. Durch die relativ geringen Siebbelastungen der Seitensiebe 12 wird auch ein stabiler Funktionsablauf gesichert.

**Fig.4** zeigt eine schematische Querschnittansicht durch den Saftringkanal 11 im unteren Bereich der Außenwandung 25 des Extraktionsturms gemäß Fig.2. Dargestellt ist ein zweiteiliger Saftringkanal 11. Die beiden Hälften des Saftringkanals 11 stoßen an ihren Wandungen 42 gegeneinander. Von diesen Wandungen 42 aus laufen sie konisch zu der jeweiligen Mitte zwischen je zwei sich gegenüberliegenden Wandungen 42 zu. Statt der dargestellten seitlichen konischen Ausbildung kann auch eine senkrecht konische Form gewählt werden. Die konische Form ergibt sich aus der Vorgabe, Infektionsnischen zu vermeiden. An den unzugänglichen schmalen Ecken nahe den Wandungen 42 herrscht dadurch aufgrund des geringeren Querschnitts eine größere Strömungsgeschwindigkeit. Diese zwingt dort eventuell verbliebene Feststoffe dazu, mitgeführt zu werden. Sie können dann nicht mehr Auslöser von Infektionen des Turmsaftes sein.

Zusätzlich sind im Bereich der Wandungen 42 und auf den inneren Umfang der Innenwandung 43 verteilt Spülstutzen 44 zum Spülen des oder der Saftringkanäle 11 vorgesehen. Die oberhalb der Safträume 13 eingegebene Spülflüssigkeit kann nach dem Spülvorgang durch die beiden im 90°-Winkel zu den Wandungen 42 angeordneten Auslaßstutzen 10 entnommen werden.

Die Seitensiebe 12 sind in den Rahmen 16 vorzugsweise hochkant nebeneinander auf den Umfang des Extraktionsturms verteilt angeordnet und jeweils an ihren senkrecht verlaufenden seitlichen Teilen mit der Außenwandung der Außenzarge 1 lösbar verbunden, beispielsweise verschraubt. Vorzugsweise werden Senkkopfschrauben verwendet, die, da sie nicht aus der Siebfläche herausragen, nicht durch die Abstreifer 4b abgeschert werden können. Wenigstens eines der Seitensiebe 12 bildet mit einem zugehörigen Teil 49 der Außenwandung 25 der Außenzarge 1 eine Baueinheit. Mit dem Teil 49 wird die Öffnung 19 verschlossen. Beim Öffnen der Öffnung 19 ist daher das Sieb 12 direkt mit entnehmbar und muß nicht erst gelöst und schräg gestellt werden, um entnommen werden zu können. Durch diese Öffnung 19, die die Größe eines Mannloches aufweist, sind die Verschraubungen der benachbarten Seitensiebe 12 in den Rahmen 16 erreichbar und von innen lösbar. Nach Lösung der Schrauben können die einzelnen Siebe 12 mitsamt Rahmen 16 zur Öffnung 19 geschoben und durch diese entnommen werden.

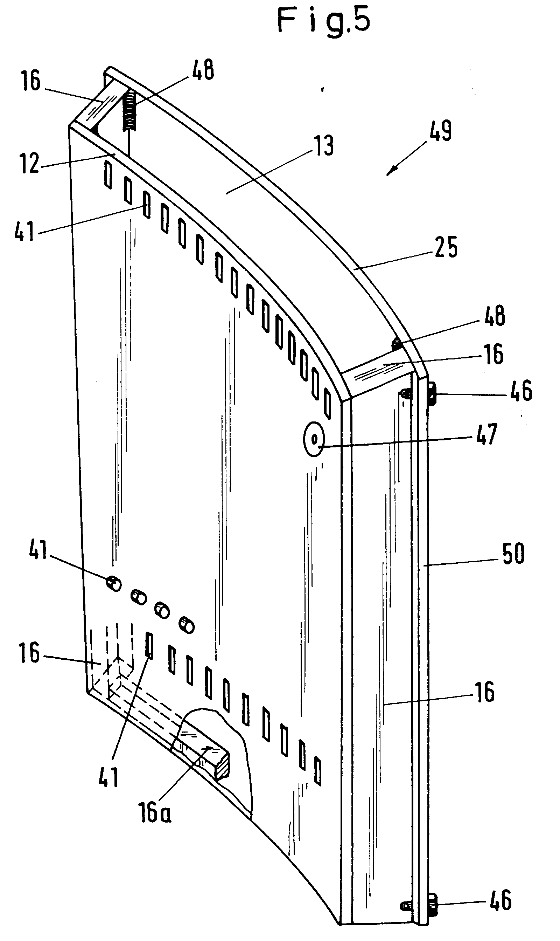

**Fig.5** zeigt im Prinzip eine perspektivische Ansicht einer Baueinheit von Seitensieb 12 und Rahmen 16. Das Seitensieb 12 ist mit dem Rahmen 16 unlösbar und mit der Außenwandung 25 der Außenzarge 1 lösbar verbunden. Als Verbindungmöglichkeit sind beispielsweise ein Verschrauben, Anheften mittels geeigneter Heftklammern, Verlöten oder Verschweißen denkbar. Hier ist das Sieb 12 mittels Verschweißens mit dem Rahmen 16 verbunden. Versenkte Schrauben 47 verbinden die senkrecht verlaufenden Balken des Rahmens 16 mit der Außenwandung 25 der Außenzarge 1. Dabei kann entweder von außen eine Kontermutter auf eine Schraube 47 gesetzt werden, oder die Schraube 47 zieht sich in einer Bohrung mit Gewinde in dem Blech der Außenwandung 25 fest. Eine weitere Möglichkeit, die Rahmen 16 mit der Außenwandung 25 der Außenzarge 1 zu verbinden, ist ein Verschweißen der Teile. In Fig.5 ist dies durch eine Schweißnaht 48 angedeutet. Diese Verbindungsart bietet sich für das Teil 49 an, das als eine Baueinheit von Sieb 12, Rahmen 16 und dem Wandungsstück 49 der Außenwandung 25, aus dem Extraktionsturm entnehmbar ist. Das Verschrauben der Siebe 12, Rahmen 16 mittels Senkschrauben mit der Außenwandung 25 der Außenzarge 1 bietet sich hingegen für die übrigen Siebelemente an. Dadurch entfallen die aufwendigen Abdichtungen der sonst von außen aufgeschraubten Abdeckbleche der Öffnungen 19 der bekannten Extraktionstürme. Auch sind nur noch ein oder zwei Öffnungen 19 als Mannlöcher vorgesehen. Dadurch wird die Konstruktion erheblich vereinfacht, vorallem in Hinsicht auf die Abdichtung der Öffnungen 19, da die Siebe 12 in den fest mit diesen verbundenen Rahmen 16 von einer Öffnung 19 aus eingeschoben werden. Diese Öffnung 19 wird anschließend mittels des Teiles 49 der Außenwandung 25 wieder verschlossen.

Weitere Schrauben 46 können vorgesehen sein, um den Teil 49 der Außenwandung 25, mit der übrigen Wandung 25 zu verbinden. Die Schrauben 46 sind dafür an über die senkrechten Balken des Rahmens 16 hervorstehenden Rändern 50 des Teiles 49 angeordnet. In Fig.5 ist jeweils oben und unten in den Ecken der Ränder 50 eine Schraube 46 angeordnet.

Die Öffnungen 41 des Siebes 12 können, wie im oberen Bereich des Siebes 12 in Fig.5 als Prinzipskizze gezeigt, gleichmäßig über die Breite des Siebes 12 verteilt sein. Andererseits können sie auch, wie in dem unteren Teil des Siebes 12 in Fig.5 gezeigt, unregelmäßig angeordnet und über die Breite des Siebes 12 verteilt sein. Bei den in Drehrichtung immer größer werdenden Sieböffnungen können Feststoffteilchen, die sich in dem Sieb 12 sonst festsetzen würden, mittels des oder der Abstreifer, in Drehrichtung, zu den größeren Öffnungsbreiten hin geführt oder gedrückt und dadurch heraustransportiert werden. Die Form der Sieböffnungen ist beliebig wählbar und an den Bedarf anpaßbar. Sie kann beispielsweise rund, oval oder schlitzförmig sein. Vorzugsweise werden als Siebe 12 sogenannte Spaltsiebe eingesetzt, wie beispielhaft in Fig.6 dargestellt.

Der Rahmen 16 weist außer den beiden senkrechten Balken zumindest an seiner unteren Seite einen Querbalken 16a auf. Dieser ist schmaler als die beiden anderen Balken. Er ist nur mit den beiden anderen Balken und dem Sieb 12 verbunden. An ihm strömt der Turmsaft aus dem durch das Sieb 12, die senkrechten Balken des Rahmens 16 und die Außenwandung 25 gebildeten Saftraum 13 in den darunter gelegenen, hier nicht dargestellten Saftringkanal 11. Der Querbalken 16a kann deswegen zum einen quaderförmig, zum anderen aber auch mit einer schräg nach unten weisenden oberen Kante versehen sein. Diese weist dann in die Strömungsrichtung des abzuziehenden Turmsaftes. Anstelle der kantigen Form kann auch eine runde gewählt werden, beispielsweise bei Spaltsieben, bei denen die Siebstangen abgeflachte aneinandergefügte Rundstangen sind.

**Fig.6** zeigt eine perspektivische Detailansicht eines Spaltsiebes, wobei der seitliche Rahmen 16 zur besseren Verdeutlichung der Siebstruktur weggelassen ist. Die Sieböffnungen 41 sind spaltförmig zwischen waagerechten Stäben 51 angeordnet. Die Spaltbreite der Sieböffnungen 41 ist über die Sieblänge unterschiedlich bemessen. Die Spaltbreite ist vorzugsweise zum Saftraum 13 und in Drehrichtung größer werdend bemessen, damit sich Feststoffe, die mit dem Turmsaft hinaustransportiert werden, nicht in den Sieböffnungen 41 festsetzen können. Die Siebstäbe 51 weisen eine doppelte Konizität auf. Die Siebstäbe 51 sind seitlich in dem Rahmen 16 befestigt, was hier nicht dargestellt ist. Auf ihrer Rückseite sind die Siebstäbe 51 mittels eines Bolzens 52, auf den sie beispielsweise aufgewickelt sind, miteinander verbunden. Die Fertigung der Spaltsiebe erfolgt beispielsweise durch Abflachen von nebeneinander auf Bolzen 52 aufgewickelten Rundstäben 51. Die gegenseitigen Abstände der Siebstangen 51 sind hier aus Klarheitsgründen auseinandergezogen dargestellt. Sie werden bestimmt durch die tatsächlichen Erfordernisse und eingestellt durch die Abstände auf den Bolzen 52. Diese Abstände können durch Unterlegscheiben, Abstandsringe oder mittels in den Bolzen vorgesehener Nuten erzielt und fest eingestellt werden. An den Seitenflächen der Bolzen 52 können die senkrecht stehenden Rahmen 16 angefügt werden, beispielsweise mittels Verschweißens. Die Bolzen 52 weisen in diesem Fall eine geringere Breite auf als die in Fig. 6 aus Gründen der Klarheit nicht gezeichneten Rahmen 16. Sie reichen deswegen nicht bis an die Außenwandung 25 der Außenzarge 1 heran, wie in Fig.6 durch den Abstand 51a bzw. die Pfeile 51b angedeutet.

Solche für die Siebe 12 geeigneten Spaltsiebe sind Stand der Technik.

Die Bolzen 52 können auch als Rahmen 16 dienen, wenn der Saftraum 13 zu den seitlich anschließenden Safträumen nicht abgeschlossen sein muß. In diesem Fall reicht nämlich der durch die Bolzen 52 und ggf. nicht dargestellte Abstandsstücke bestimmte Abstand der Siebstangen 51 von der Außenwandung 25 aus, um den Abfluß des gesiebten Turmsaftes aus dem Saftraum 13 in den darunterliegenden Saftverbindungsweg 22 zu gewährleisten. Bei Verwendung eines zusätzlichen Rahmens 16 oder von zusätzlichen Abstandsstücken kann der Abstand 51a vergrößert oder über die Länge des Bolzens 52 unterschiedlich bemessen werden.

## Patentansprüche

1. Verfahren zur Fest-Flüssig-Extraktion, insbesondere der Saccharose aus Rübenschnitzeln, mit Gegenstromextraktion in einem Extraktionsturm, aus dem Turmsaft über Siebe abgezogen wird, **dadurch gekennzeichnet, daß**
Turmsaft zusammen mit den bei dem Verfahren anfallenden kleinformatigen Festbestandteilen wie Sand im wesentlichen ausschließlich über Seitensiebe (12) abgezogen wird.

2. Verfahren nach Anspruch 1, **dadurch gekennzeichnet, daß** Restmengen der Festbestandteile, die nicht durch die Seitensiebe (12) geströmt sind, in einem Bodenteil (5) strömungsfähig gehalten werden.

3. Verfahren nach Anspruch 2, **dadurch gekennzeichnet, daß** Abstreifer (4b) an Bodenteil (5) und/oder an den Seitensieben (12) vorgesehen sind, die die Restmengen der Festbestandteile strömungsfähig halten.

4. Verfahren nach Anspruch 1, 2 oder 3, **dadurch gekennzeichnet, daß** die Restmenge der Festbestandteile mittels Turmsaft strömungsfähig gehalten wird und durch eine Bodenöffnung (14) in ein Auffanggefäß (15) strömt.

5. Extraktionsturm zur Durchführung des Verfahrens zur Fest-Flüssig-Extraktion nach einem der Ansprüche 1 bis 4, **dadurch gekennzeichnet, daß** das Bodenteil (5) im wesentlichen geschlossen, tragfähig und steif ausgeformt ist.

6. Extraktionsturm nach Anspruch 5, **dadurch gekennzeichnet, daß** hinter den Seitensieben (12) ein Saftraum oder mehrere Safträume (13) angeordnet ist oder sind.

7. Extraktionsturm nach Anspruch 6, **dadurch gekennzeichnet, daß** der oder die Safträume (13) hinter den Seitensieben (12) als ein Ringraum ausgebildet ist oder sind, wobei die Seitensiebe (12) eine Innenwandung des Extraktionsturms bilden.

8. Extraktionsturm nach Anspruch 6 oder 7, **dadurch gekennzeichnet, daß** der Saft- oder Ringraum (13) oder die Safträume Auslaßöffnungen (17) aufweist oder aufweisen, über die der Turmsaft abziehbar ist.

9. Extraktionsturm nach Anspruch 8, **dadurch gekennzeichnet, daß** die Auslaßöffnungen (17) solche Querschnitte aufweisen, daß der Turmsaft mit etwa gleichförmiger Strömungsgeschwindigkeit abziehbar ist.

10. Extraktionsturm nach Anspruch 8 oder 9, **dadurch gekennzeichnet, daß** die Auslaßöffnungen (17) ringförmig angeordnet sind und zum Abzug des Turmsaftes durch oder über darunter angeordnete Saftverbindungswege (22) mit einem Saftringkanal (11) verbunden sind.

11. Extraktionsturm nach Anspruch 10, **dadurch gekennzeichnet, daß** der Saftringkanal (11) mit einer Ringleitung (23) verbunden ist, über die der Turmsaft zum Abzug weiterleitbar ist.

12. Extraktionsturm nach einem der Ansprüche 5 bis 11, **dadurch gekennzeichnet, daß** die Seitensiebe (12) durch je einen Rahmen (16) gehalten und von innen mit der Außenwandung (25) verbunden sind.

13. Extraktionsturm nach Anspruch 12, **dadurch gekennzeichnet, daß** der Rahmen (16) den Abstand des Seitensiebes (12) von der Außenwandung (25) definiert und die seitliche Grenze des hinter den Seitensieben (12) liegenden Saftraumes (13), und in der Außenwandung (25) ein oder mehrere verschließbare seitliche Öffnungen (19) vorgesehen sind, die als Mannloch zur Reinigung oder zur Auswechslung der Seitensiebe (12) ausgebildet sind.

14. Extraktionsturm nach Anspruch 13, **dadurch gekennzeichnet, daß** Seitensieb (12), Rahmen (16) und der zugeordnete Teil (49) der Außenwandung (25) eine Baueinheit bilden, die in die Außenwandung (25 ) einsetzbar ist.

15. Extraktionsturm nach einem der Ansprüche 6,7 oder 8, **dadurch gekennzeichnet, daß** dem Saft- oder Ringraum (13) oder den Safträumen zur Steuerung der Strömungsgeschwindigkeit des aus Abflußöffnungen (24) des Saftringkanals (11) ausströmenden Turmsaftes und/oder zum Spülen des Saftraumes (13) Mittel (20) zum Blockieren oder Verstellen der Abflußöffnungen (24) zugeordnet sind.

16. Extraktionsturm nach Anspruch 15, **dadurch gekennzeichnet, daß** die Mittel (20) zum Blockieren oder Verstellen der Abflußöffnungen (24) des Saftringkanals (11) und/oder der Safträume (13) Schieber, Klappen oder dergleichen sind.

17. Extraktionsturm nach Anspruch 16, **dadurch gekennzeichnet, daß** mehrere Schieber, Klappen oder dergleichen über den Umfang des ringförmig ausgebildeten Saftringkanals (11) verteilt angeordnet sind.

18. Extraktionsturm nach Anspruch 16 oder 17, **dadurch gekennzeichnet, daß** die Schieber (20), Klappen oder dergleichen so steuerbar oder regelbar sind, daß wahlweise ein oder mehrere Schieber geöffnet und andere geschlossen sind, derart, daß die variierende Strömungsrichtung weitgehend die Ablagerung von Feststoffen unterbindet.

19. Extraktionsturm nach Anspruch 15 oder 16, **dadurch gekennzeichnet, daß** der Saftringkanal (11) und/oder die Safträume (13) und die Mittel (20) zur Blockierung der Abflußöffnungen (24) so ausgeformt sind, daß der Saftringkanal (11) und/oder die Safträume (13) abschnittsweise spülbar ist oder sind.

20. Extraktionsturm nach Anspruch 5, **dadurch gekennzeichnet, daß** das Bodenteil (5) ein oder mehrere Auffanggefäße (15), Abzugstaschen oder dergleichen zum Abzug der bei dem Prozeß anfallenden Restmenge des Feststoffes aufweist.

21. Extraktionsturm nach Anspruch 5 oder 19, **dadurch gekennzeichnet, daß** die Abzugstaschen (15) zum Abzug der dort angesammelten Feststoffe in einem oder mehreren Segmenten des Bodenteils (5) angeordnet sind.

22. Extraktionsturm nach Anspruch 21, **dadurch gekennzeichnet, daß** die Abzugstaschen (15) schlitzförmige Öffnungen (14) aufweisen.

23. Extraktionsturm nach Anspruch 21, **dadurch gekennzeichnet, daß** die Abzugstaschen (15) siebförmige Öffnungen (14) aufweisen.

24. Seitensieb für einen Extraktionsturm nach einem der Ansprüche 5 bis 23, **dadurch gekennzeichnet, daß** es mit einem Rahmen (16) segmentartige Baueinheiten bildet, bei denen die Saftverbindungswege (22) an der unteren Seite des Rahmens (16) zwischen Rahmen (16) und Außenwandung (25) vorgesehen sind.

25. Seitensieb nach Anspruch 24, **dadurch gekennzeichnet, daß** die Baueinheit (12,16) mit einem in die Außenzarge (1) einsetzbaren Teil (49) der Außenwandung (25) eine Einheit bildet.

## Claims

1. Process for solid-liquid extraction, in particular of the sucrose from beet cossettes, using countercurrent extraction in an extraction tower, from which tower juice is drawn off via screens, **characterised in that** tower juice is drawn off together with the small-sized solid constituents obtained in the process, such as sand, essentially exclusively via side screens (12).

2. Process according to Claim 1, **characterised in that** residual quantities of solid constituents which have not flown through the side screens (12) are kept flowable in a floor part (5).

3. Process according to Claim 2, **characterised in that** wipers (4b) are provided at floor part (5) and/or at the side screens (12), which wipers keep the residual quantities of solid constituents flowable.

4. Process according to Claim 1, 2 or 3, **characterised in that** the residual quantity of solid constituents is kept flowable by means of tower juice and flows through a floor opening (14) into a collecting vessel (15).

5. Extraction tower for carrying out the process of solid-liquid extraction according to one of Claims 1 to 4, **characterised in that** the floor part (5) is shaped to be essentially closed, load-carrying and rigid.

6. Extraction tower according to Claim 5, **characterised in that** one or more juice spaces (13) is or are arranged behind the side screens (12).

7. Extraction tower according to Claim 6, **characterised in that** the juice space or juice spaces (13) behind the side screens (12) is or are constructed as a ring space, the side screens (12) forming an inner wall of the extraction tower.

8. Extraction tower according to Claim 6 or 7, **characterised in that** the juice or ring space (13) or the juice spaces has or have outlet openings (17) via which the tower juice can be drawn off.

9. Extraction tower according to Claim 8, **characterised in that** the outlet openings (17) have such cross-sections that the tower juice can be drawn off at an approximately uniform flow rate.

10. Extraction tower according to Claim 8 or 9, **characterised in that** the outlet openings (17) are arranged in the shape of a ring and, to draw off the tower juice, are connected to a juice ring channel (11) by or via juice communication passages (22) arranged below said outlet openings.

11. Extraction tower according to Claim 10, **characterised in that** the juice ring channel (11) is connected to a ring conduit (23) via which the tower juice can be advanced for drawing off.

12. Extraction tower according to one of Claims 5 to 11, **characterised in that** the side screens (12) are held by a frame (16) in each case and are connected to the outer wall (25) from inside.

13. Extraction tower according to Claim 12, **characterised in that** the frame (16) defines the distance of the side screen (12) from the outer wall (25) and the lateral boundary of the juice space (13) lying behind the side screens (12) and there are provided in the outer wall (25) one or more closable lateral openings (19) which are constructed as a manhole for cleaning or for exchanging the side screens (12).

14. Extraction tower according to Claim 13, **characterised in that** side screen (12), frame (16) and the associated part (49) of the outer wall (25) form a constructional unit which can be inserted into the outer wall (25).

15. Extraction tower according to one of Claims 6,7 or 8, **characterised in that**, to control the flow rate of the tower juice flowing out of the outflow openings (24) of the juice ring channel (11) and/or to rinse the juice space (13), means (20) for blocking or adjusting the outflow openings (24) are associated with the juice or ring space (13) or with the juice spaces.

16. Extraction tower according to Claim 15, **characterised in that** the means (20) for blocking or adjusting the outflow openings (24) of the juice ring channel (11) and/or of the juice spaces (13) are slides, flaps or the like.

17. Extraction tower according to Claim 16, **characterised in that** a plurality of slides, flaps or the like are arranged distributed over the circumference of the juice ring channel (11) constructed in the shape of a ring.

18. Extraction tower according to Claim 16 or 17, **characterised in that** the slides (20), flaps or the like can be controlled or automatically regulated such that selectively one or more slides are opened and others closed, in such a way that the varying direction of flow largely prevents the deposition of solids.

19. Extraction tower according to Claim 15 or 16, **characterised in that** the juice ring channel (11) and/or the juice spaces (13) and the means (20) for blocking the outflow openings (24) are shaped such that the juice ring channel (11) and/or the juice spaces (13) can be rinsed in sections.

20. Extraction tower according to Claim 5, **characterised in that** the floor part (5) has one or more collecting vessels (15), drawing-off pockets or the like for drawing off the residual quantity of solid obtained in the process.

21. Extraction tower according to Claim 5 or 19, **characterised in that** the drawing-off pockets (15) for drawing off the solids accumulated there are arranged in one or more segments of the floor part (5).

22. Extraction tower according to Claim 21, **characterised in that** the drawing-off pockets (15) have slot-type openings (14).

23. Extraction tower according to Claim 21, **characterised in that** the drawing-off pockets (15) have screen-type openings (14).

24. Side screen for an extraction tower according to one of Claims 5 to 23, **characterised in that** it forms with a frame (16) segment-like constructional units in which the juice communication passages (22) are provided at the lower side of the frame (16) between frame (16) and outer wall (25).

25. Side screen according to Claim 24, **characterised in that** the constructional unit (12,16) forms with a part (49), which can be inserted into the outer shell (1), of the outer wall (25) a unit.

## Revendications

1. Procédé d'extraction solide-liquide, particulièrement de saccharose hors de cossettes de betteraves, par extraction à contre-courant dans une tour d'extraction de laquelle du jus de tour est soutiré par des tamis, caractérisé en ce que du jus de tour est soutiré en même temps que les constituants solides de petite dimension résultant du procédé, tel que du sable, en substance de manière exclusive à travers des tamis latéraux (12).

2. Procédé suivant la revendication 1, caractérisé en ce que des quantités résiduelles des constituants solides, qui ne se sont pas échappés par les tamis latéraux (12), sont maintenues à l'intérieur d'une partie de fond (5) dans un état capable de s'écouler.

3. Procédé suivant la revendication 2, caractérisé en ce que des racleurs (4b) sont prévus à la partie de fond (5) et/ou aux tamis latéraux (12), qui maintiennent les quantités résiduelles des constituants solides dans un état capable de s'écouler.

4. Procédé suivant la revendication 1, 2 ou 3, caractérisé en ce que la quantité résiduelle des constituants solides est maintenue dans un état capable de s'écouler à l'aide de jus de tour et s'échappe par un orifice de fond (14) vers un récipient collecteur (15).

5. Tour d'extraction pour l'exécution du procédé pour l'extraction solide-liquide suivant l'une des revendications 1 à 4, caractérisée en ce que la partie de fond (5) est façonnée en substance de manière fermée, stable et rigide.

6. Tour d'extraction suivant la revendication 5, caractérisée en ce qu'une ou plusieurs chambres à jus (13) sont disposées derrière les tamis latéraux (12).

7. Tour d'extraction suivant la revendication 6, caractérisée en ce que la ou les chambres à jus (13) sont conformées derrière les tamis latéraux (12) comme une ou plusieurs chambres annulaires, les tamis latéraux (12) formant une paroi intérieure de la tour d'extraction.

8. Tour d'extraction suivant la revendication 6 ou 7, caractérisée en ce que la chambre à jus ou chambre annulaire (13) ou les chambres à jus sont pourvues de passages de décharge (17), à travers lesquels le jus de tour peut être soutiré.

9. Tour d'extraction suivant la revendication 8, caractérisée en ce que les passages de décharge (17) présentent des sections transversales telles que le jus de tour peut être soutiré avec une vitesse d'écoulement à peu près constante.

10. Tour d'extraction suivant la revendication 8 ou 9, caractérisée en ce que les passages de décharge (17) sont disposés de manière annulaire et sont reliés à un canal de ceinture à jus (11), en vue du soutirage du jus de tour par ou à travers des chemins de communication pour jus (22) situés en-dessous de ceux-ci.

11. Tour d'extraction suivant la revendication 10, caractérisée en ce que le canal de ceinture à jus (11) est relié à une canalisation circulaire (23), à travers laquelle le jus de tour peut être transféré en vue de son soutirage.

12. Tour d'extraction suivant l'une des revendications 5 à 11, caractérisée en ce que les tamis latéraux (12) sont tenus chacun par un cadre (16) et sont reliés depuis l'intérieur à la paroi extérieure (25).

13. Tour d'extraction suivant la revendication 12, caractérisée en ce que le cadre (16) définit la distance entre le tamis latéral (12) et la paroi extérieure (25) ainsi que la limite latérale de la chambre à jus (13) située derrière les tamis latéraux (12) et en ce qu'un ou plusieurs orifices latéraux obturables (19), qui sont conformés en trou d'homme en vue du rinçage ou du remplacement des tamis latéraux (12), sont prévus dans la paroi extérieure (25).

14. Tour d'extraction suivant la revendication 13, caractérisée en ce que le tamis latéral (12), le cadre (16) et la partie associée (49) de la paroi extérieure (25) forment une unité de construction qui peut être intégrée dans la paroi extérieure (25).

15. Tour d'extraction suivant l'une des revendications 6, 7 ou 8, caractérisée en ce que la chambre à jus ou chambre annulaire (13) ou les chambres à jus (13) sont associées à des moyens (20) pour bloquer ou ajuster les ouvertures de décharge (24), en vue du réglage de la vitesse d'écoulement du jus de tour s'échappant des ouvertures de décharge (24) du canal de ceinture à jus et/ou en vue du rinçage de la chambre à jus (13).

16. Tour d'extraction suivant la revendication 15, caractérisée en ce que les moyens (20) pour bloquer ou ajuster les ouvertures de décharge (24) du canal de ceinture à jus (11) et/ou des chambres à jus (13) sont des vannes, clapets ou dispositifs similaires.

17. Tour d'extraction suivant la revendication 16, caractérisée en ce que plusieurs vannes, clapets ou dispositifs similaires sont disposés le long du pourtour du canal de ceinture à jus (11) conformé en anneau.

18. Tour d'extraction suivant la revendication 16 ou 17, caractérisée en ce que les vannes (20), clapets ou dispositifs similaires peuvent être commandés ou réglés de telle manière qu'au choix un ou plusieurs clapets sont ouverts et d'autres sont fermés, de telle sorte que la direction d'écoulement qui varie supprime largement le dépôt de solides.

19. Tour d'extraction suivant la revendication 15 ou 16, caractérisée en ce que le canal de ceinture à jus (11) et/ou les chambres à jus (13) ainsi que les moyens (20) pour bloquer les ouvertures de décharge (24) sont conformés de telle sorte que le canal de ceinture à jus (11) et/ou les chambres à jus (13) peuvent être rincés par segments.

20. Tour d'extraction suivant la revendication 5, caractérisée en ce que la partie de fond (5) comporte un ou plusieurs récipients collecteurs (15), poches de soutirage ou moyens semblables pour l'évacuation de la quantité résiduelle de solides produits au cours de la mise en oeuvre du procédé.

21. Tour d'extraction suivant la revendication 5 ou 19, caractérisée en ce que les poches d'évacuation (15) servant à l'évacuation des solides y collectés sont disposées dans un ou plusieurs segments de la partie de fond (5).

22. Tour d'extraction suivant la revendication 21, caractérisée en ce que les poches d'évacuation (15) sont pourvues d'orifices en forme de tamis (14).

23. Tour d'extraction suivant la revendication 21, caractérisée en ce que les récipients collecteurs (15) sont pourvus d'orifices en forme de tamis (14).

24. Tamis latéral pour une tour d'extraction suivant l'une des revendications 5 à 23, caractérisé en ce qu'il constitue, ensemble avec un cadre (16), des unités de construction en forme de segments, dans lesquelles les chemins de communication pour jus (22) sont prévus à la partie inférieure du cadre (16), entre le cadre (16) et la paroi extérieure (25).

25. Tamis latéral suivant la revendication 24, caractérisé en ce que l'unité de construction (12, 16) constitue une unité ensemble avec une partie (49) pouvant être intégrée dans le châssis extérieur (1) de la paroi extérieure (25).
